# EUROPEAN PATENT APPLICATION

(11) **EP 1 329 155 A2**
(43) Date of publication of application: **23.07.2003**
(21) Application number: 03000765.2
(22) Date of filing: 14.01.2003
(51) Int. Cl.: A01J 5/00, A01J 5/04

(54) **Flexible tubes for fluid transportation, with their yieldably reinforced end connectable to a rigid nozzle**

(30) Priority: 17.01.2002 IT MI20020025
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico (Reggio Emilia) (IT)
(74) Representative: Giambrocono, Alfonso, Dr. Ing.

(57) **Abstract**

The flexible tubes (18.1, 18.2, 28.1, 28.2) are used for fluid transportation and have, in proximity to that end or those ends thereof intended to be connected to a rigid nozzle (16.1, 16.2, 26.1, 26.2), a section provided with yieldable reinforcement means. The reinforcement means comprise a projecting outer rib (32.1, 32.2, 34.1, 34.2) of the same material as the tube (18.1, 18.2, 28.1, 28.2) and integral therewith, and shaped as a helix coaxial to the tube (18.1, 18.2, 28.1, 28.2).

## Description

The present invention relates to flexible tubes used for fluid transportation, and in particular flexible tubes for milking plants, at least one end of such tubes being intended to be connected to a rigid nozzle.

In the milking plant sector the known art recognizes and testifies to the importance of the function performed by the sheaths of a milking unit, into each of which a teat of the animal to be milked is inserted. "Good" milking is also synonymous with a "good" sheath, especially with regard to its type of constituent material and its characteristic geometry. In particular:
- the sheath material must be such that the mechanical massaging action which the sheath exerts on the animal's teat must not alter the cutaneous integrity of the teat with the passage of time;
- the geometry chosen for the sheath must not penalize the yield and quality of the milking operation nor the time which it takes.

In particular, with regard to the sheath geometry or configuration, the following can be distinguished:
- a head, presenting the mouth into which the teat is inserted;
- a slightly frusto-conical hollow body, one end of which is integral with the head, this body forming the intermediate part of the sheath (that mostly involved in the milking), which is enclosed within the relative tube casing;
- a short milk tube, which enables the newly obtained milk to flow into the manifold of the milking unit, one end of this tube being integral with that end of the body distant from the head, the other end of the tube being pressure-mounted onto one of the four rigid nozzles (also known in this sector as nipples) of the manifold, to form a sealed connection.

As is well known, during milking the four tube casings of a milking unit, with their relative sheaths, are applied to the corresponding teats of the animal to be milked, so that they lie substantially vertical and facing upwards, above the relative manifold. Consequently the four short milk tubes emerging from the corresponding tube casing descend towards the manifold, converging slightly, to then connect to the relative nipple of this latter.

On termination of milking, the tube casings are detached from the respective teats and then left free (while awaiting the next milking operation), so that by virtue of its weight the tube casing containing the relative sheath hangs downwards supported in practice only by the short milk tube (the short pulsation tube, which enables vacuum to be applied to the interspace between the body of the sheath and the tube casing, provides only a limited contribution from this viewpoint). Under such conditions it is a fundamental necessity that, in the light of the particular flute mouthpiece shape of the manifold nipple, when each short milk tube folds downwards, it perfectly seals the relative nipple. If this were not to happen, a considerable quantity of environmental air would be drawn through the sheath as the manifold is under vacuum, and would be contaminated because of the particular environment, this resulting in quality penalization of the milk just obtained (this being equivalent to a considerable reduction in its commercial value).

Another considerable drawback is the consequent reduction in the useful vacuum reserve of the milking plant, a considerable energy costs being involved in restoring this reserve.

Consequently between one milking operation and the next (pause stage), the short milk tube folds downwards, with the free end of the nipple pressing against the inner wall of the short milk tube to ensure its sealing and prevent entry of contaminated environmental air into the manifold.

The short milk tube must therefore, in proximity to that end thereof mounted on the nipple, present a good mechanical resistance to laceration with time, the action of the nipple in the long term causing local surface deterioration of the material (normally rubber) of the short milk tube.

In an attempt to avoid this phenomenon, most of the commercially available sheaths have for a long time presented an increased wall thickness of the short milk tube along that part concerned with this phenomenon. As this results in a greater rigidity of the short milk tube in this section, it follows that nipple sealing cannot be perfect, with consequent loss of vacuum during the pause. Moreover, because of the greater tension which arises in the outermost fibres of said reinforced section by virtue of its greater rigidity to flexure, the surface cracking, which occurs in the same section because of the natural ageing of the constituent rubber of the sheath, tends to propagate more rapidly to involve the entire thickness of the wall of the short milk tube in a short time, so causing it to fracture.

Another solution traditionally used in an attempt to solve this problem consists of providing in said section of the short milk tube a series of equidistant coaxial annular outer reinforcement projections formed from the same material as the sheath and integral therewith. From practical tests it has however been found that the deformation of the short milk tube on closing the nipple (pause stage) is concentrated within a very short portion adjacent to the nipple, involving only some of the annular reinforcements, the deformation being concentrated essentially within those few (two or three) short rubber segments lying between the annular reinforcements. This causes a more rapid degradation of the material (rubber) within these segments, with the appearance after a short time of surface cracks which propagate fairly rapidly throughout the entire thickness of the tube, causing it to fracture.

A similar problem, although decidedly less pressing, also arises in proximity to the far end of the short pulsation tubes of a milking unit, that end being pressure-mounted on a nozzle or nipple which communicates with the interspace between the body of the sheath and the relative tube casing. Again in this case the solutions utilized in the known art are the same as described for the short milk tube, i.e. either a thickness increase in the section concerned or its reinforcement by equidistant, coaxial annular outer projections.

An object of the present invention is to at least drastically reduce, if not completely eliminate, the problems presented by the aforedescribed solutions used in the known art, and more generally to provide flexible tubes, suitable for conveying fluids, with at least one yieldably reinforced end intended to be connected to a rigid nozzle or nipple, said tubes being provided adjacent to said end with reinforcement means which prevent tube laceration within that region for a time decidedly longer than that obtainable with the solutions of the known art.

Another object of the present invention, limited to milking plants, is to provide flexible tubes of the aforesaid type, to be used as short milk tubes, which also ensure perfect sealing against the relative nipple.

These objects are attained by the flexible tubes of the present invention, having, in proximity to that end or those ends thereof intended to be connected to a rigid nozzle, a section provided with yieldable reinforcement means, characterised in that the reinforcement means comprise a projecting outer rib of the same material as the tube and integral therewith, and shaped as a helix coaxial to the tube.

The helical reinforcement rib can have a cross-section which is greater (obtained by increasing in particular the projection or the width of the rib, or both) in that region of the reinforced section in which the stresses are greatest. As a variant, but for the same purpose, the helix pitch can be varied, reducing it where the stresses are greatest.

From tests carried out it has been found that the helical reinforcement rib:
- enables the stresses caused by the bending of the tube within its reinforced section to be distributed along a greater length than in the case in which the parallel annular projections of the known art are used, so that the stresses become distributed along a greater portion, with a consequent longer tube life;
- enables that section reinforced by the helical rib to preserve good deformability, so that if the tube is a short milk tube, perfect sealing of the relative nipple is obtained.

The invention will be more easily understood from the ensuing description of one embodiment thereof given by way of example. In this description, reference is made to the accompanying drawings, in which:
Figure 1 is a vertical section through a milking unit when in use (milking stage), the section being taken through only two of the four tube casings of the unit;
Figure 2 is a section similar to the preceding, but with the milking unit shown in its pause stage.

As can be seen from the figures, the milking unit 10 comprises a milk manifold 12 provided with a milk exit nozzle 14 and four nozzles or nipples (of which only two, indicated by 16.1 and 16.2, are partly visible), conventionally shaped as a flute mouthpiece. On each nipple there is pressure-mounted a corresponding end of a so-called short milk tube (only two, indicated by 18.1 and 18.2, are shown in the figure) forming part of a relative sheath (20.1 and 20.2 respectively), the body of which is contained within a corresponding tube casing (22.1 and 22.2 respectively). The interspace (24.1 and 24.2) between the tube casing (22.1 and 22.2) and relative sheath (20.1 and 20.2) communicates via a respective nozzle (26.1 and 26.2) and relative short pulsation tube (28.1 and 28.2) with the interior of the manifold 12.

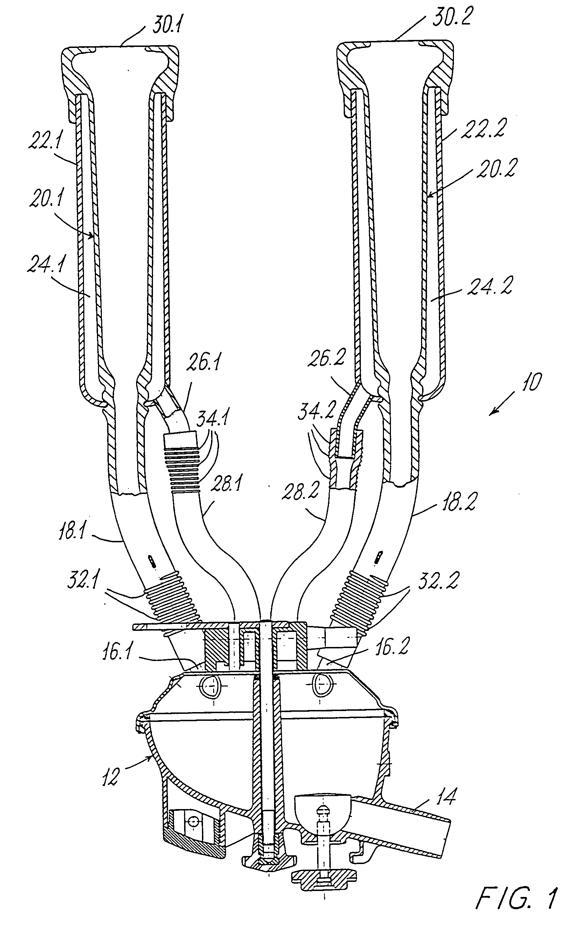

As already stated, in Figure 1 the milking unit 10 is shown in the condition which it assumes during the milking stage, in which the tube casings (22.1 and 22.2) are substantially vertical and face upwards, a corresponding teat (not shown) of the animal to be milked being inserted into each sheath (20.1 and 20.2).

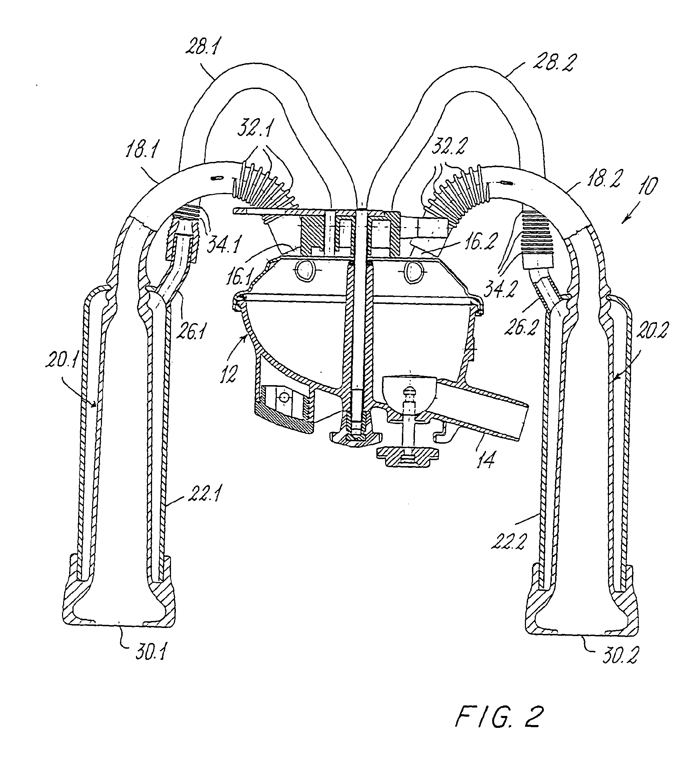

On termination of the milking stage, the tube casings (22.1 and 22.2) are detached from the relative teat and left free until the next milking stage. During this intermediate stage (pause) the milking unit 10 assumes by gravity the condition shown in Figure 2, in which the tube casings are again substantially vertical but facing downwards. Consequently the short milk tubes (18.1 and 18.2) fold over as shown in the same figure, to seal the relative nipple (16.1 and 16.2) such that the environmental air (which is contaminated) cannot be drawn through the mouth (30.1 and 30.2) of the sheaths (20.1 and 20.2) and reach the interior of the manifold 12 (which is maintained under vacuum).

As can be seen from the figures, the short milk tubes (18.1 and 18.2) present in proximity to that of their ends mounted on the relative nipples (16.1 and 16.2) a section which is yieldably reinforced by a projecting surface rib (32.1 and 32.2) of helical pattern coaxial to the tube (18.1 and 18.2), which is formed from the same material as this latter and is integral therewith. In the specific illustrated example, when the short milk tube (18.1 and 18.2) is non-deformed (in practice the situation of Figure 1), the helical rib (32.1 and 32.2) presents uniformly projecting equidistant turns. However, as already stated, the distance between the turns can vary along the extension of the helical rib, as can the extent of its projection and/or its width, in order to more greatly reinforce those regions of the tube (18.1 and 18.2) which most require it.

As can also be seen from the figures, the same arrangement used for yieldably reinforcing the short milk tubes (18.1 and 18.2) has also been used for the short pulsation tubes (28.1 and 28.2) of the milking unit 10.

In this respect, an outer helical reinforcement rib (34.1 and 34.2) is provided in proximity to that end of these tubes which is pressure-mounted onto the corresponding nipple (26.1 and 26.2) of the relative tube casing (22.1 and 22.2), even though in this case the working conditions of the relative tubes (28.1 and 28.2) are much less severe than those of the short milk tubes (18.1 and 18.2). A considerably longer tube life is hence also obtained in this case.

## Claims

1. Flexible tubes (18.1, 18.2, 28.1, 28.2) for liquid transportation, having in proximity to that end or those ends thereof intended to be connected to a rigid nozzle (16.1, 16.2, 26.1, 26.2) a section provided with yieldable reinforcement means, **characterised in that** the reinforcement means comprise a projecting outer rib (32.1, 32.2, 34.1, 34.2) of the same material as the tube (18.1, 18.2, 28.1, 28.2) and integral therewith, and shaped as a helix coaxial to the tube (18.1, 18.2, 28.1, 28.2).

2. Flexible short milk tubes (18.1, 18.2, 28.1, 28.2) as claimed in claim 1, wherein the helical reinforcement rib (32.1, 32.2, 34.1, 34.2) has a cross-section which is greater in that region of the reinforced section in which the stresses are greatest.

3. Flexible short milk tubes (18.1, 18.2, 28.1, 28.2) as claimed in claim 1, wherein the helical reinforcement rib (32.1, 32.2, 34.1, 34.2) has a smaller pitch in that region of the reinforcement section in which the stresses are greatest.

4. Flexible short milk tubes as claimed in claim 1, wherein the tubes are the short milk tubes (18.1, 18.2) of a milking unit (10).

5. Flexible short milk tubes as claimed in claim 1, wherein the tubes are the short pulsation tubes (28.1, 28.2) of a milking unit (10).
